Europäisches Patentamt

European Patent Office

Office européen des brevets

(19)

(11) Numéro de publication: **0 187 963**
**B1**

(12) **FASCICULE DE BREVET EUROPEEN**

(45) Date de publication du fascicule du brevet: **03.10.90**

(51) Int. Cl.⁵: **G 05 B 19/407, G 05 D 3/14**

(21) Numéro de dépôt: **85115827.9**

(22) Date de dépôt: **12.12.85**

(54) Asservissement de position autobloquant à moteur asynchrone.

(30) Priorité: **17.12.84 FR 8419268**

(43) Date de publication de la demande:
**23.07.86 Bulletin 86/30**

(45) Mention de la délivrance du brevet:
**03.10.90 Bulletin 90/40**

(84) Etats contractants désignés:
**AT BE CH DE FR GB IT LI LU NL SE**

(56) Documents cités:
**DE-A-2 801 581**
**DE-B-1 267 451**

**NC/CAM - THE NEW INDUSTRIAL
REVOLUTION, Proceedings of the 13th Annual
Meeting and Technical Conference of the
Numerical Control Society, Cincinnati, Ohio,
28-31 mars 1976, pages 75-85, Numerical
Control Society Inc., Glenview, Illinois, US; H.W.
ROHMILLER: "Variable cycle controller, a new
concept in low cost teachable controls"**

(73) Titulaire: **Société Anonyme dite: CEGELEC
13, rue Antonin Raynaud
F-92309 Levallois-Perret (FR)**

(72) Inventeur: **Desvaux, Jean-Pierre
61 Quai de la Darounie
F-94480 Ablon sur Seine (FR)**

(74) Mandataire: **Weinmiller, Jürgen et al
Lennéstrasse 9 Postfach 24
D-8133 Feldafing (DE)**

Courier Press, Leamington Spa, England.

# Description

La présente invention concerne les éléments de postionnement à moteur électrique utilisés dans le domaine du contrôle industriel pour le positionnement mécanique d'organes réglants (vannes, registres...) utilisés en régulation ou d'axes utilisés en robotique.

Elle est plus particulièrement relative aux éléments de positionnement à moteur électrique asynchrone chargé mécaniquement par un réducteur autobloquant et commandé par tout ou rien, notamment ceux qui utilisent un moteur asynchrone à cage sans collecteur ni bague leur conférant une grande fiabilité.

Une régulation par tout ou rien ne contrôle le moteur que par son sens et son temps de marche. N'agissant pas sur la vitesse du moteur ou son couple elle évite l'emploie de variateurs électroniques de vitesse. Par contre, elle pose le problème de la course résiduelle après la coupure de l'alimentation électrique du moteur qui rend imprécise la position atteinte. Pour résoudre ce problème, il est connu de pourvoir le moteur asynchrone d'un frein mécanique par exemple à disque ou d'une frein électronique. L'emploi d'un frein mécanique présente l'inconvénient de nécessiter des moteurs asynchromes spécialement concus pour les asservissements de position qui sont nécessairement plus chers que les moteurs asynchrones ordinaires. L'empoi d'un frein électronique présente l'inconvénient d'imposer la circulation de courants internes dans les enroulements statoriques du moteur asynchrone et par conséquent de provoquer un échauffement important particulièrement gênant dans ce type de régulation où le moteur est soumis à de nombreux cycles de marche-arrêt.

La présente invention a pout but d'éviter ces inconvénients pour un asservissement autobloquant dont le moteur ne subit pas de retour de couple à l'arrêt et cela, sans sacrifier de la précision dans le positionnement.

Elle a pour objet un asservissement de position autobloquant à moteur asynchrone commandé en tout ou rien comportant une boucle de rètroaction qui élabore la commande d'excitation du moteur asynchrone par comparaison de la position effective de l'asservissement avec une position de consigne et qui est pourvu d'une boucle auxiliaire de correction de l'erreur due un déplacement effectué par le moteur sur sa lancée après désexcitation, incorporant un circuit (26, 26') d'estimation estimant ce déplacement comme proportionnel à la durée d'excitation tant que celle-ci n'excède pas le temps nécessaire au moteur pour atteindre sa vitesse nominale, caractérisé en ce que ledit circuit d'estimation (26, 26') est pourvu de moyens d'auto-adaptation, ajustant le coefficient de proportionnalité reliant le déplacement effectué par le moteur sur sa lancée après désexcitation à la durée d'excitation en fonction de l'erreur résiduelle entre la position effective et la position de consigne, de manière à minimiser cette erreur.

Le circuit d'estimation du déplacement est avantageusement un circuit auto-adaptatif se réglant de manière à minimiser l'erreur résiduelle de position subsistant après l'arrêt du moteur en fin d'excitation.

D'autres caractéristiques et avantages de l'invention ressortiront de la description ci-après d'un mode de réalisation donnée à titre d'exemple. Cette description sera faite en regard du dessin dans lequel:

la figure 1 représente un réseau de courbes E illustrant en fonction du temps le déplacement effectué par le moteur asynchrone d'une asservissement chargé par l'intermédiaire d'un réducteur autobloquant lorsqu'il est soumis à une excitation de durée constante en présence de différentes conditions de charge mécanique,

la figure 2 est une courbe de réponse d'un circuit d'estimation du déplacement effectué par un moteur asynchrone sur sa lancée après désexcitation,

la figure 3 est le schéma synoptique d'un asservissement selon l'invention incluant dans une boucle correctrice un circuit d'estimation du déplacement effectué par un moteur asynchrone sur sa lancée après désexcitation.

et la figure 4 est un ensemble de diagrammes explicitant le fonctionnement de l'asservissement représenté à la figure précédente.

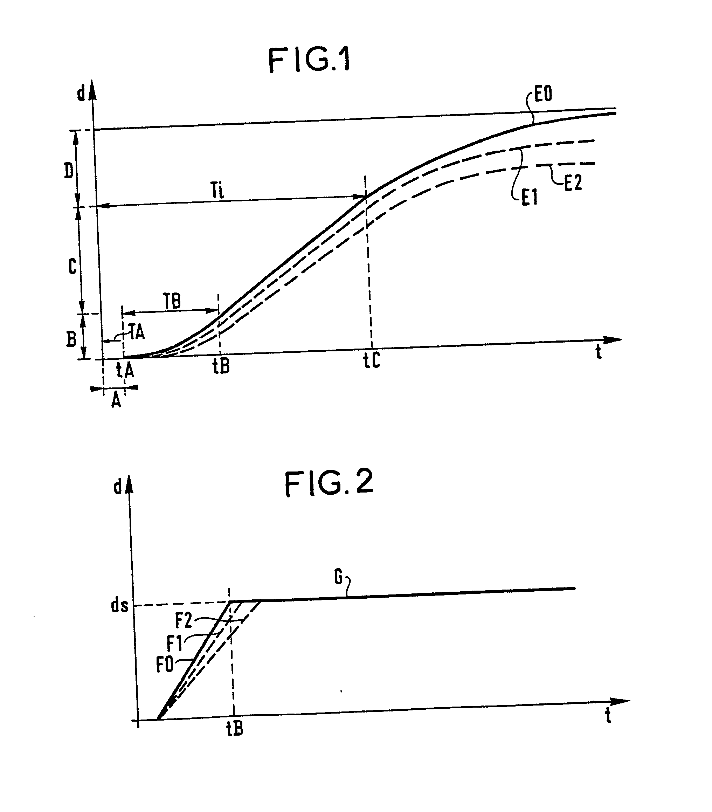

Le réseau des courbes E0, E1, E2 de la figure 1 illustre I déplacement en fonction du temps d'un asservissement mu par un moteur asynchrone couplé mécanique à l'organe à régler par un réducteur autobloquant et commandé en tout ou rien. Pour toutes les courbes E0, E1, E2 la durée d'excitation Ti du moteur est la même, seule la charge varie et va croissant de la courbe E0 à la courbe E2. On distingue quatre phases:

une phase A de prédémarrage en début d'excitation durant un court intervalle de temps Ta pendant lequel le moteur ne s'est pas encore mis en mouvement,

une phase B de mise en vitesse du moteur où ce dernier continuant à être excité démarre et accélère jusqu'à la vitesse nominale. Elle dure un temps T1 de 50 à 100 ms.

une phase C dans laquelle le moteur toujours excité tourne à sa vitesse nominale. Cette phase dure jusqu'à la fin du temps Ti

et une phase D où le moteur cesse d'être excité mais continue un certain temps à tourner sur sa lancée.

Lorsque le temps d'excitation du moteur est faible, le déplacement que le moteur effectue sur sa lancée n'est pas négligeable et peut représenter une partie importante du déplacement total. C'est notamment le cas lorsque l'asservissement parvient au voisinage de sa position de consigne de sorte qu'il constitue une cause importante d'imprécision.

Dans les asservissements de position classiques mus par des moteurs asynchrones commandés en tout ou rien, on tente d'éliminer cette cause d'imprécision par un freinage énergique du moteur en fin d'excitation. Mais ce freinage qu'il soit mécanique ou électromagnétique n'est pas sans inconvénient puisqu'il conduit soit à incorporer un frein spécial au moteur asynchrone soit à faire circuler les courants de freinage dans le stator du moteur qui provoquent un échauffement important.

On propose ici une autre solution qui consiste à estimer l'amplitude du déplacement de l'asservissement effectué par le moteur sur sa lancée après désexcitation en fonction de la durée écoulée de l'excitation en cours et à utiliser cette estimation pour corriger le signal d'erreur de position de l'asservissement pendant les temps d'excitation du moteur.

Pour estimer l'amplitude du déplacement affectué par le moteur sur sa lancée en fin d'excitation, on distingue deux cas selon que le moteur a atteint ou non sa vitesse nominale abstraction faite du glissement qui est toujours très faible dans ce type d'utilisation.

Si le moteur a atteint sa vitesse nominale, on admet que le déplacement effectué par le moteur sur sa lancée après désexcitation garde une valeur constante ce qui est assez exacte pour une charge mécanique donnée en raison de la faible valeur du glissement et qui est encore admissible même si la charge varie car l'erreur reste suffisamment petite pour justifier au plus, au cours d'une prochaine correction d'un temps d'excitation du moteur faible, insuffisant pour qu'il atteigne sa vitesse nominal.

Sur une durée d'excitation inférieure au temps nécessaire pour que le moteur atteigne sa vitesse nominale, on admet que le déplacement effectué par·le moteur sur sa lancée en fin d'excitation varie linéairement depuis une valeur nulle tant que la durée d'excitation n'excède pas celle Ta nécessaire à la mise en mouvement du moteur jusqu'à la valeur constante adoptée dès que la durée d'excitation est suffisante pour que le moteur atteigne sa vitesse nominale.

La figure 2 illustre la loi de définition à laquelle on aboutit pour la détermination de l'amplitude du déplacement effectué par le moteur sur la lancée. Celle-ci se présente sous la forme de deux segments de droite dans le prolongement l'un de l'autre, l'un F partant d'une valeur de déplacement nul pour un temps d'excitation égal au temps nécessaire pour la mise en mouvement du moteur et arrivant à une valeur de déplacement ds pour un temps d'excitation nécessaire au moteur pour atteindre sa vitesse nominal et l'autre G restant à la valeur de déplacement ds et prolongeant le segment F parallèlement à l'axe du temps.

Comme le temps d'excitation nécessaire au moteur pour atteindre sa vitesse nominale varie avec la charge, le segment de droite F peut prendre différentes inclinaisons comme le montre les segments F0, F1, F2 tracés en relation avec les courbes E0, E1, E2 de la figure 1. Cette incertitude sur l'inclinaison entraîne une incertitude non négligeable sur l'amplitude du déplacement pour des temps d'excitation du moteur TA+TB. Pour la lever on prévoit d'ajuster la pente du segment de droite F en fonction de l'erreur résiduelle apparaissant après chaque correction de position de l'asservissement obtenue avec un temps d'excitation du moteur inférieur à une valeur arbitraire correspondant au temps minimal de mise en vitesse du moteur.

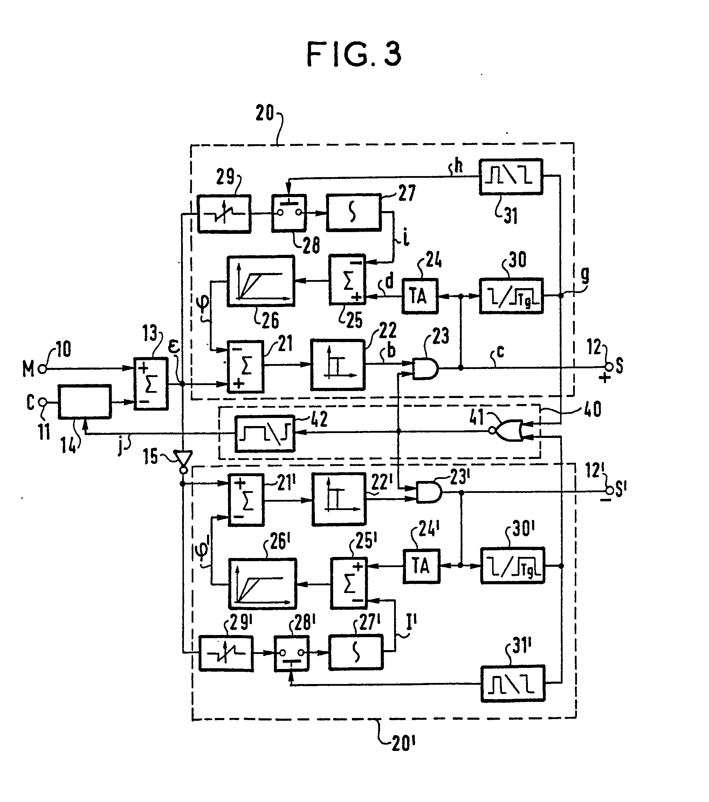

La figure 3 représente le schéma synoptique d'un asservissement de position employant un circuit d'estimation du déplacement effectué par le moteur sur sa lancée après désexcitation synthétisant la loi de la figure 2.

Cet asservissement présente deux entrées 10, 11 sur lesquelles il reçoit respectivement un signal de mesure M de la position effective de l'asservissement engendré par exemple par un capteur de position solidaire de l'organe à régler et un signal C de consigne de position délivré par exemple par un dispositif de commande de processus, et deux sorties 12, 12' sur lesquelles il délivre de signaux binaires de commande d'excitation S, S' du moteur un pour chaque sens de marche.

Les deux entrées 10, 11 aboutissent sur un premier comparateur formé d'un soustracteur 13 délivrant un signal d'erreur de position ε. L'entrée 10 affectée au signal de mesure M de la position effective du moteur aboutit directement au premier comparateur tandis que l'entrée 11 affecté au signal de consigne de position C en est séparée par une mémoire 14 qui permet de figer la valeur pendant les instants où le moteur continue son mouvement sur sa lancée après désexcitation. La mémoire 14 est contrôlée par un signal j provenant de l'asservissement. Le signal d'erreur de position ε est appliqué à un inverseur 15. Ses deux versions inversée et non inversée servent à la commande de deux parties identiques 20, 20' de l'asservissement spécialisées chacune dans l'élaboration d'une commande d'excitation du moteur pour un sens donnée de marche correspondant pour l'une 20 à la correction d'une erreur de position ε positive et pour l'autre 20' à la correction d'une erreur de position négative.

La partie 20 qui élabore la commande d'excitation du moteur ε pour le sens de marche repéré par+apte à la correction d'un signal d'erreur de position positif comporte en entrée un deuxième comparateur formé d'un soustracteur 21 qui récoit sur son entrée additive le signal d'erreur de position ε et sur son entrée soustractive un signal φ d'estimation du déplacement qu'effectuera le moteur sur sa lancée après désexcitation provenant d'une boucle auxiliaire de correction. Le signal d'erreur corrigé ε−φ est ensuite appliqué à une bascule à hystérésis 22 qui engendre le signal de commande d'excitation S proprement dit transmis à la sortie 12 par l'intermédiaire d'une porte logique de type "et" 23.

La bascule à hystérésis 22 se déclenche sur une valeur positive du signal d'erreur de position ε qui correspond à la valeur maximale de l'erreur de position tolérée et retourne au repos pour un signal d'erreur de position ε nul. Ce peut être un trigger de schmitt.

La porte logique de type "et" 23 garantit un temps de repos après chaque commande d'excitation du moteur afin de permettre un bon fonctionnement du réglage adaptatif de la boucle auxiliaire de correction qui va être décrite.

La commande S d'excitation du moteur disponible en sortie de la porte logique de type "et" 23 est appliquée non seulement sur la sortie 12 mais encore à l'entrée d'un circuit à retard 24 et d'un circuit monostable 30.

Le circuit à retard 24 constitue l'entrée de la boucle auxiliaire de correction. Il retarde toute commande d'excitation d'une durée TA correspondant au temps nécessaire au moteur pour commencer à tourner après avoir été excité. A la sortie de ce circuit à retard 24, la commande d'excitation S qui est un signal en forme de créneau positif voit son niveau haut ajusté par un circuit de réglage formé d'un soustracteur 25 avant d'être intégré par un intégrateur saturable 26 qui délivre en réponse le signal φ servant à la correction du signal d'erreur ε.

L'intégrateur saturable 26 attaqué par un signal en créneau de même durée que la commande S d'excitation du moteur mais avec un retard TA et un niveau ajusté engendre un signal de sortie φ dont l'amplitude varie en fonction de la durée de la commande S d'excitation en cours selon une loi approchant la loi d'estimation représentée à la figure 2 et constitue le circuit proprement dit d'estimation des déplacements effectués par le moteur sur sa lancée en fin d'excitation.

L'adjustement du niveau du créneau fourni à l'intégrateur saturable 26 permet de régler la rapidité de variation de son signal de sortie φ dans sa plage non saturée c'est-à-dire la pente du segment F de la figure 2. Il se fait grâce au signal i provenant d'un intégrateur 27 qui rend le réglage adaptatif en effectuant la moyenne des erreurs de position résiduelles dues à une mauvais estimation du déplacement effectué par le moteur sur sa lancée après désexcitation. Ces erreurs sont tirées du signal d'erreur de position ε en figeant la valeur du signal de consigne C pendant le temps d'arrêt du moteur et en échantillonnant le signal d'erreur ε dés l'arrêt du moteur tout en écartant les valeurs trop importantes pour pouvoir résulter d'un petit déplacement et être uniquement dues à une mauvaise estimation des déplacements effectués par le moteur sur sa lancée en fin d'excitation. Le blocage des variations du signal de consigne C se fait à l'aide de la mémoire 14, l'échantillonnage du signal d'erreur de position φ à l'aide du circuit d'échantillonnage 28 et la mise à l'écart des valeurs trop importantes à l'aide d'un circuit de sélection à fenêtre d'amplitude 29.

La fin de la commande d'excitation du moteur S sert de repère pour la définition des instants d'échantillonnage de l'échantillonneur 28, des instants de blocage de la porte logique "et" 23 garantissant une période de repos après chaque commande d'excitation et des instants de blocage de l'inscription de la mémoire 14. Elle est détecté par le monostable 30 qui émet en réponse une impulsion de durée Tg dite délai d'immobilisation correspondant au temps maximal nécessaire à l'arrêt du moteur dans toutes les conditions de charge de l'asservissement. Cette impulsion Tg qui définit en quelque sorte le temps laissé au moteur pour s'arrêter après désexcitation est utilisée au sein de la partie 20 élaborant l'ordre d'excitation S pour déclencher sur sa fin un autre monostable 31 émettant une impulsion de courte durée débloquant l'échantillonneur 28. Elle est également utilisé à l'extérieur des parties 20 et 20' élaborant les ordres d'excitation du moteur S et S' pour bloquer la porte logique de type "et" 23 et la mémoire 14 par l'intermédiaire d'un circuit de contrôle 40 commun aux deux parties 20 et 20' qui se compose d'une porte logique de type "non ou" à deux entrées 41 placée en entrée contrôlant l'une des entrées de la porte logique "et" 23 et d'un circuit monostable 42 prolongeant l'impulsion Tg de la durée d'échantillonnage de l'erreur résiduelle.

La partie 20 ne réagit pas à un signal d'erreur de position ε négatif qui nécessite un fonctionnement du moteur dans l'autre sens de marche—car sa bascule à hystérésis 22 rest dans ce cas au repos.

La partie 20' est identique à la partie 20 et présente les mêmes éléments repérés par les mêmes indexations affectées d'uno prime. Elle agit sur le circuit de contrôle commun 40 par la deuxième entrée de la porte logique de type "non ou" 41 connectée à la sortie de son monostable 30' qui est le pendant du monostable 30 de la partie 20. Recevant de l'inverseur 15 une version changée de signe du signal d'erreur de position ε, elle élabore des commandes d'excitation S' du moteur dans le sens—en réponse à un signal d'erreur de position ε négatif, et ne réagit pas à un signal d'erreur de position ε positif.

La durée de l'impulsion Tg élaborée par l'un ou l'autre des monostables 30, 30' ou délai d'immobilisation, peut être prolongée autant que l'on veut afin de limiter la fréquence des cycles marche arrêt du moteur. On sait en effet qu'un moteur asynchrone a un courant de démarrage qui est de trois à cinq fois son courant nominal et que la plupart des moteurs ne peuvent supporter de manière continue.

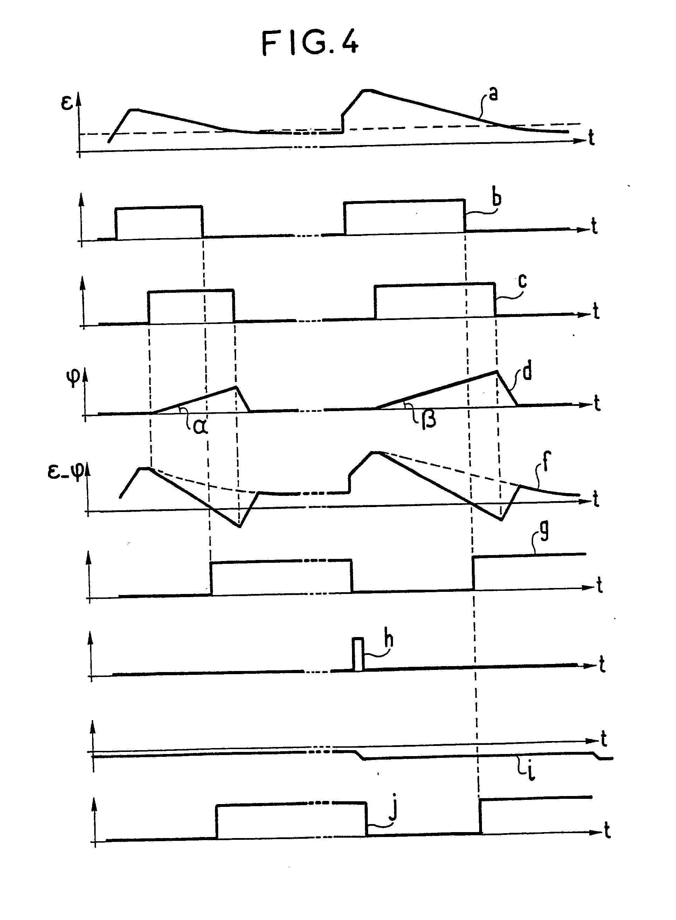

Les diagrammes des courbes de la figure 4 illustrent deux cas de fonctionnement successifs de l'asservissement pour la correction de deux faibles erreurs positives de position insuffisantes pour que le moteur atteigne sa vitesse nominale lors de la correction, avec dans le premier cas une surestimation de l'amplitude du déplacement effectuée par le moteur après le fin de son excitation.

La première couche a représenté l'évolution en fonction du temps de l'erreur de position ε. L'asservissement étant au repos, cette dernière se met à croître par suite d'un changement de la valeur de consigne, traverse le seul positif d'erreur tolérée représenté par une droite horizontale en pointillés puis se stabilise à une faible valeur avant toute correction par mise en marche du moteur.

La deuxième courbe b représente la commande d'excitation S élaborée en réponse par la bascule à hystérésis 22 et disponible en sortie de la porte logique de type "et" 23. C'est un créneau positif dont le front montant coïncide avec le franchissement du seuil positif d'erreur tolérée pour le signal d'erreur de position ε.

La troisième courbe c représente la commande d'excitation S lorsqu'elle parvient en sortie du circuit à retard 24. C'est un créneau dont le front montant présente un retard TA sur celui des créneaux de la courbe b. Le début de ce créneau coïncide avec la mise en mouvement du moteur et par conséquent avec le début de la décroissance du signal d'erreur de position ε.

La quatrième courbe de représente le signal d'estimation φ de l'amplitude du déplacement du moteur après la fin de son excitation. C'est une rampe linéaire de pente α démarrant en même temps que les créneaux de la courbe C, c'est-à-dire avec la mise en mouvement du moteur.

La cinquième courbe f représente le signal d'erreur de position ε corrigé par le signal d'estimation φ appliqué à l'entrée de la bascule à hystérésis 22. Ce signal d'erreur corrigé présente un décroissance accélérée pendant la mise en mouvement du moteur. Les fronts descendants de la courbe C représentant la fin de la commande d'excitation S coïncident avec les passages par zéro de ce signal qui entraînement le basculement au repos de la bascule à hystérésis 22.

La sixième courbe g représente le signal de sortie du monostable 30 fixant la durée d'immobilisation. Ce signal est un créneau positif qui se délenche après chaque commande d'excitation représentée par la courbe b et s'oppose à toute nouvelle commande d'excitation du moteur dans un sens ou dans l'autre pendant un temps qui est au minimum suffisant pour atteindre un arrêt complet du mouvement du moteur.

La septième courbe h représente l'impulsion d'échantillonnage de l'erreur résiduelle engendrée par le monostable 31 à la fin de chaque durée d'immobilisation marquée par les fronts descendants des créneaux de la courbe g.

La huitième courbe i représente le signal i de réglage du niveau du créneau appliqué à l'intégrateur saturable 26 fournissant le signal d'estimation φ.

La neuvième courbe j représente le signal je de blocage de l'inscription de la mémoire 14 qui est actif pendant un temps légèrement supérieur à la durée d'immobilisation et à celle de l'impulsion d'échantillonnage de l'erreur résiduelle.

On remarque sur la courbe a, en début de la deuxième mise en route de l'asservissement, l'effet du blocage de l'inscription de la mémoire 14. On a supposé que la position de consigne avait changé pendant ce blocage entraînement une évolution positive de l'erreur réelle de position. Dès que le blocage est supprimé, le signal d'erreur de position ε prend en compte la vraie valeur de la position de consigne et effectue un saut positif entraînant l'élaboration d'une nouvelle commande d'excitation du moteur. Les différents signaux évoluent de la même façon que précédemment, à l'exception du signal d'estimation φ dont la pente β est moins grande, l'amplitude du déplacement effectué par le moteur après la fin de son excitation précédente ayant été surévaluée puisque l'erreur résiduelle n'a pas change de signe.

L'ensemble du circuit d'asservissement décrit peut être réalisé d'une manière simple à l'aide d'amplificateurs opérationnels et de quelques circuits logiques.

**Revendications**

1. Asservissement de position autobloquant à moteur asynchrone commandé en tout ou rien comportant une boucle de rétroaction qui élabore la commande d'excitation du moteur asynchrone par comparaison de la position effective de l'asservissement avec une position de consigne et qui est pourvu d'une boucle auxiliaire de correction de l'erreur due un déplacement effectué par le moteur sur sa lancée après désexcitation, incorporant un circuit (26, 26') d'estimation estimant ce déplacement comme proportionnel à la durée d'excitation tant que celle-ci n'excède pas le temps nécessaire au moteur pour atteindre sa vitesse nominale, caractérisé en ce que ledit circuit d'estimation (26, 26') est pourvu de moyens d'auto-adaptation, ajustant le coefficient de proportionnalité reliant le déplacement effectué par le moteur sur sa lancée après désexcitation à la durée d'excitation en fonction de l'erreur résiduelle entre la position effective et la position de consigne, de manière à minimiser cette erreur.

2. Asservissement selon la revendication 1, caractérisé en en ce que les moyens d'auto-adaptation dudit circuit d'estimation comportent:
   des moyens (30, 30') pour définir après chaque commande d'excitation une durée dite durée d'immobilisation Tg suffisante pour obtenir l'arrêt du mouvement du moteur,
   des moyens (41, 23, 23') pour interdire toute nouvelle commande d'excitation pendant la durée d'immobilisation Tg,
   des moyens (28, 31, 28', 31') pour échantillonner l'erreur de position résiduelle subsistant en fin de durée d'immobilisation Tg et
   des moyens (41, 42, 14) pour figer la valeur de la position de consigne pendant les durées d'immobilisation et d'échantillonnage de l'erreur résiduelle.

3. Asservissement selon la revendication 2, caractérisé en ce que les moyens d'auto-adaptation comportent en outre:
   des moyens de sélection à fenêtre d'amplitude (29, 29') écartant les échantillons de l'erreur résiduelle dont l'amplitude absolue dépasse un certain seuil.

4. Asservissement selon la revendication 1, caractérisé en ce que la boucle auxiliaire de correction comporte:
   un circuit à retard (24, 24') retardant la commande d'excitation d'un délai Tg au moins égal au temps de mise en mouvement du moteur,
   un circuit (25, 25') de réglage du niveau du signal de commande d'excitation issu du circuit à retard (24, 24') et

un intégrateur saturable (26, 26') opérant sur le signal de sortie du circuit de réglage de niveau (25, 25') et constituant ledit circuit d'estimation.

5. Asservissement selon la revendication 4, caractérisé en ce que les moyens d'auto-adaptation comportent:

un intégrateur (27, 27') fournissant un signal de contrôle au circuit de réglage de niveau (25, 25'),

un circuit d'échantillonnage (28, 28') recevant un signal d'erreur de position ε provenant de la comparaison de la position effective de l'asservissement et de sa position de consigne et délivrant des échantillons à l'intégrateur (27, 27'),

un premier circuit monostable (30, 30') engendrant après chaque commande d'excitation une impulsion de durée Tg dite durée d'immobilisation suffisante pour obtenir l'arrêt du mouvement du moteur,

un circuit de blocage formé d'une porte logique (23, 23') bloquant l'élaboration de toute commande d'excitation pendant une impulsion de durée d'immobilisation,

un deuxième circuit monostable (31, 31') élaborant une impulsion d'échantillonnage à destination du circuit d'échantillonnage (28, 28') en fin de chaque impulsion de durée d'immobilisation et

une mémoire (14) figeant la valeur de la position de consigne pendant les impulsions de durée d'immobilisation et d'échantillonnage.

**Patentansprüche**

1. Selbsthemmendes Stellungsregelsystem mit Asynchronmotor und Ein-aus-Steuerung und mit einer Rückkopplungsschleife, welche den Steuerbefehl zum Erregen des Asynchronmotors durch Vergleich der tatsächlichen Stellung der Regelung mit einer Sollstellung erzeugt und welche mit einer Hilfsschleife zur Korrektur des Fehlers aufgrund einer vom Motor bewirkten Verstellung bei seinem Auslauf nach der Entregung ausgestattet ist, wobei die Hilfsschleife eine Schätzschaltung (26, 26') enthält, welche diese Verstellung als proportional zur Erregungsdauer schätzt, solange diese nicht die vom Motor benötigte Zeit zum Erreichen seiner Normgeschwindigkeit überschreitet, dadurch gekennzeichnet, daß die Schätzschaltung (26, 26') mit Selbstanpassungsmitteln versehen ist, die den Proportionalitätsfaktor anpassen, welcher die durch den Motor bei seinem Auslauf nach der Entregung bewirkte Verstellung mit der Erregungsdauer in Abhängigkeit von dem zwischen der tatsächlichen Stellung und der Sollstellung bestehenden Restfehler verbindet, sodaß der Fehler minimiert wird.

2. Regelsystem nach Anspruch 1, dadurch gekennzeichnet, daß die Selbstanpassungsmittel der Schätzschaltung folgende Komponenten aufweisen:

Mittel (30, 30') zum Definieren einer Zeitdauer, Stillstandsdauer Tg genannt, nach jedem Erregungssteuerbefehl, welche ausreicht, den Stillstand des Motors zu erreichen,

Mittel (41, 23, 23'), die während der Stillstandsdauer Tg jeglichen Erregungssteuerbefehl verhindern, und

Mittel (28, 31, 28', 31'), um den am Ende der Stillstandsdauer Tg verbleibenden Rest-Stellungsfehler abzustaten, und

Mittel (41, 42, 14) zum Festhalten des Wertes der Sollstellung während der Dauer des Stillstandes und der Abtastung des Restfehlers.

3. Regelsystem nach Anspruch 2, dadurch gekennzeichnet, daß die Selbstanpassungsmittel weiter Auswahlmittel mit Amplitudenfenster (29, 29') aufweisen, welche diejenigen Abtastproben beseitigen, deren Absolutamplitude einen bestimmten Schwellenwert übersteigt.

4. Regelsystem nach Anspruch 1, dadurch gekennzeichnet, daß die Korrekturhilfsschleife folgende Komponenten aufweist:

eine Verzögerungsschaltung (24, 24'), welche den Erregungssteuerbefehl um eine Zeit Tg verzögert, die mindestens der Zeit entspricht, die der Motor braucht, um in Bewegung zu kommen,

eine Schaltung (25, 25') zum Einstellen des Pegels des von der Verzögerungsschaltung (24, 24') ausgegebenen Erregungssteuerbefehlssignals, und

eine sättigbare Integrationsschaltung (26, 26') die das Ausgangssignal der Pegeleinstellungsschaltung (25, 25') verarbeitet und die Schätzschaltung bildet.

5. Regelsystem nach Anspruch 4, dadurch gekennzeichnet, daß die Selbstanpassungsmittel folgende Komponenten aufweisen:

eine Integrationsschaltung (27, 27'), die ein Steuersignal an die Pegeleinstellungsschaltung (25, 25') liefert,

eine Abtastschaltung (28, 28'), die ein Stellungsfehlersignal ε empfängt, das aus dem Vergleich der tatsächlichen Stellung des Regelsystems und seiner Sollstellung stammt, und die Abtastproben an die Integrationsschaltung (27, 27') liefert,

eine erste monostabile Kippschaltung (30, 30') welche nach jedem Erregungssteuerbefehl einen Impuls von der Dauer Tg, Stillstandsdauer genannt, erzeugt, die ausreicht, um den Bewegungsstillstand des Motors zu erreichen,

eine Sperrschaltung, bestehend aus einem logischen Tor (23, 23'), das die Erzeugung jeglichen Erregungssteuerbefehls während eines Impulses von der Länge der Stillstandsdauer blokiert,

eine zweite monostabile Kippschaltung (31, 31') welche am Ende jedes Impulses von der Länge der Stillstandsdauer einen Abtastimpuls an die Abtastschaltung (28, 28') liefert, und

einen Speicher (14), der den Wert der Sollstellung während der Impulse von der Länge der Stillstandsdauer und der Abtastung festhält.

**Claims**

1. A self-locking position servo-controller having an asynchronous motor under on/off control and including a feedback loop which generates a control signal for the asynchronous motor by comparing the real position of the servo-controller with a reference position, and which is provided with an auxiliary loop for correcting the error due to displacement performed by the motor under its momentum after de-excitation, the auxiliary loop including an estimator circuit (26, 26') estimating said displacement as being proportional to the duration of excitation so long as said duration does not exceed the time required by the motor to reach its nominal speed, the servo-controller being characterized in that said estimation circuit (26, 26') is provided with self-adaptive means for adjusting the coefficient of proportionality relating the displacements performed by the motor under its momentum after de-excitation to the duration of excitation as a function of the residual error between the real position and the reference position, and in such a manner as to minimize said error.

2. A servo-controller according to Claim 1, characterized in that the self-adaptation means of said estimator circuit comprise:

means (30, 30') for defining a stopping time Tg after each excitation control signal and of sufficient length to ensure the motion of the motor has stopped;

means (41, 23, 23') for preventing any further excitation control signal occurring during the stopping time Tg;

means (28, 31, 28', 31') for sampling the residual position error that remains at the end of the stopping time Tg; and

means (41, 42, 14) for freezing the value of the reference position throughout the stopping time and the residual error sampling time.

3. A servo-controller according to Claim 2, characterized in that the self-adaptation means further include:

amplitude window selection means (29, 29') for ignoring residual error samples whose absolute amplitude exceeds a certain threshold.

4. A servo-controller according to Claim 1, characterized in that the auxiliary correction loop comprises:

a delay circuit (24, 24') delaying the excitation control signal by a time TA which is not less than the time required for setting the motor into motion;

a circuit (25, 25') for regulating the level of the excitation control signal delivered by the delay circuit (24, 24'); and

a saturable integrator (26, 26') operating on the output signal from the level regulating circuit (25, 25') and constituting said estimator circuit.

5. A servo-controller according to Claim 4, characterized in that the self-adaptation means comprise:

an integrator (27, 27') providing a control signal for the level regulating circuit (25, 25');

a sampling circuit (28, 28') receiving a position error signal $\varepsilon$ obtained by comparing the real position of the servo-controller with its reference position, and delivering samples to the integrator (27, 27');

a first monostable circuit (30, 30') generating a stopping time pulse of duration Tg at the end of each excitation control signal, the duration of said pulse being sufficient to ensure that the motion of the motor comes to rest;

an inhibit circuit constituted by a logic gate (23, 23') preventing any excitation control signal being generated while the stopping time pulse is present;

a second monostable circuit (31, 31') generating a sampling pulse for the sampling circuit (28, 28') at the end of each stopping time pulse; and

a memory (14) freezing the value of the reference position throughout the duration of the stopping time and the sampling time.

# FIG.1

# FIG.2

# EP 0 187 963 B1

# FIG. 3

# FIG.4